# DEMANDE DE BREVET EUROPEEN

(11) **EP 1 693 270 A1**
(43) Date de publication de la demande: **23.08.2006**
(21) Numéro de dépôt: 06290220.0
(22) Date de dépôt: 08.02.2006
(51) Int. Cl.: B61F 5/22, B61F 5/14, B60G 11/62

(54) **Elément de suspension secondaire, avec suspension de secours, pour véhicule ferroviaire.**

(30) Priorité: 17.02.2005 FR 0501644
(71) Demandeur: HUTCHINSON, 75008 Paris (FR)
(72) Inventeur: Beaubatie, Laurent, 75014 Paris (FR)
(74) Mandataire: Jacquard, Philippe Jean-Luc

(57) **Abrégé**

L'Invention est relative à un élément suspension secondaire comprenant une membrane annulaire dont la partie interne est montée sur une première tringle solidaire d'un bogie et dont la partie externe est montée sur une deuxième tringle d'un caisson destiné à être solidarisé à une caisse d'un véhicule ferroviaire et comprenant un dispositif élastique de suspension de secours solidaire du caisson et sur lequel la première tringle vient en butée lors d'une dépressurisation d'une chambre de pression délimitée par le caisson et la membrane, caractérisé en ce que le dispositif élastique de suspension de secours est monté sans précontrainte mécanique, et présente une pièce centrale rigide (61) et une pièce externe cylindrique rigide (62), entre lesquels est adhérisé un élément élastique (66), la pièce externe annulaire rigide (61) étant solidaire d'un fond (51) du caisson opposé à la membrane annulaire (3), le fond du caisson (51) présentant une ouverture (52) de mise à l'air libre, de manière à définir une chambre (90) de mise à l'air libre d'une face (61", 61"') du dispositif élastique de suspension du secours qui est opposée à la chambre de pression (80), le dispositif élastique de suspension de secours ayant une position de secours correspondant à une dépressurisation de la membrane annulaire (3) où la pièce centrale rigide (61) est espacée du fond du caisson (distance e₂) et vient en butée avec la première tringle (2) ; et une position active correspondant à une mise en pression (P) de la chambre de pression (80), dans laquelle la pièce centrale rigide (61) est poussée par la pression (P) dans la chambre de pression (80) en direction du fond (51) du caisson (distance entre e'₁ et e₁).

## Description

La présente invention concerne un élément de suspension secondaire comprenant une membrane annulaire destinée à être mise sous pression et un élément de suspension de secours permettant une circulation du train, généralement à faible vitesse, lors d'une dépressurisation.

Dans le cas du train pendulaire Talgo, il est connu de suspendre les voitures au moyen de membranes pneumatiques inter-caisse sur bogie mono-essieu. La tringle inférieure de la membrane est montée sur une colonne verticale appartenant au bogie et formant réservoir additionnel et la tringle supérieure est liée à la partie supérieure de la caisse. A chaque bogie sont associées deux colonnes verticales et deux membranes pneumatiques.

Le ressort de secours est une butée montée en parallèle avec la membrane et précontrainte de façon à conserver en mode gonflé de la membrane une lame d'air suffisante pour permettre les mouvements dynamiques et de pendulation sans contact de la butée avec le sommet de la colonne.

Une telle butée est trop raide pour obtenir le niveau de confort requis à la grande vitesse en mode dégonflé, ce qui oblige les trains de ce type à rouler à vitesse réduite en mode dégonflé.

Il conviendrait donc de réduire cette raideur qui est actuellement de 2500N/mm sur le train pendulaire Talgo, par exemple jusqu'à 1200 N/mm.

Pour les éléments de suspension secondaire, il existe deux solutions classiques :
1) Ressort en série : c'est le montage classique des suspensions secondaires ferroviaires.
2) Ressort précontraint en parallèle : cette solution serait celle du montage actuel mais avec pièce très souple.

Dans les deux cas, le contact avec le sommet de la colonne devrait être élastique et accepter l'angle de pendulation et le débattement horizontal, ce qui introduirait des instabilités en mode gonflé. De plus, en ce qui concerne la mise en oeuvre d'un ressort précontraint, le système de précontrainte et de guidage nécessaire dans ce cas ne pourrait être que complexe mécaniquement et conduire à des risques de blocage.

L'idée de base de l'invention est de s'affranchir d'une précontrainte mécanique, et d'assurer la fonction de précontrainte de manière pneumatique à l'aide de la pression existante dans la chambre de la membre pneumatique.

L'invention concerne ainsi un élément de suspension secondaire comprenant une membrane annulaire dont la partie interne est montée sur une première tringle solidaire d'un bogie et dont la partie externe est montée sur une deuxième tringle d'un caisson destiné à être solidarisé à une caisse d'un véhicule ferroviaire et comprenant un dispositif élastique de suspension de secours solidaire du caisson et sur lequel la première tringle vient en butée lors d'une dépressurisation d'une chambre de pression délimitée par le caisson et la membrane, caractérisé en ce que le dispositif élastique de suspension de secours est monté sans précontrainte mécanique, et présente une pièce centrale rigide et une pièce externe cylindrique rigide, entre lesquels est adhérisé un élément élastique, la pièce externe annulaire rigide étant solidaire d'un fond du caisson opposé à la membrane annulaire, le fond du caisson présentant une ouverture de mise à l'air libre, de manière à définir une chambre de mise à l'air libre d'une face du dispositif élastique de suspension du secours qui est opposée à la chambre de pression, le dispositif élastique de suspension de secours ayant une position de secours correspondant à une dépressurisation de la membrane annulaire où la pièce centrale rigide est espacée du fond du caisson et vient en butée avec la première tringle ; et une position active correspondant à une mise en pression de la chambre de pression, dans laquelle la pièce centrale rigide est poussée par la pression dans la chambre de pression en direction du fond du caisson.

Le dispositif ainsi défini présente de nombreux avantages :
- Pas de mécanisme de mise en précontrainte et de guidage.
- Réglage des hauteurs précontraintes par les caractéristiques du ressort de secours (dimension et raideur) permettant un escamotage au moins partiel du ressort en mode gonflé.
- Variation de hauteur de caisse entre le mode gonflé et le mode dégonflé inférieur à celle de l'Art Antérieur.
- Pas de risque de grippage du système.
- Progressivité de la mise en contact du pied entre la tringle et le ressort de secours et du passage entre le mode gonflé et le mode dégonflé.

L'élément élastique du dispositif élastique de suspension de secours (ou ressort de secours) est de préférence tronconique, en s'évasant en direction de la membrane annulaire, ce qui permet une plus grande souplesse et le cas échéant de prendre en compte au moins en partie un fonctionnement en mode pendulaire. Ledit élément élastique peut être également cylindrique.

D'autres caractéristiques et avantages de l'invention apparaîtront mieux à la lecture de la description ci-après, en liaison avec les dessins dans lesquels :
- la figure 1 représente un mode de réalisation préféré d'une suspension secondaire selon l'invention en mode gonflé, la partie de gauche illustrant la position de la suspension sous tare (caisse à vide) et la partie de droite la position de la suspension à pleine charge ;
- la figure 2 représente la suspension secondaire de la figure 1 en mode dégonflé.

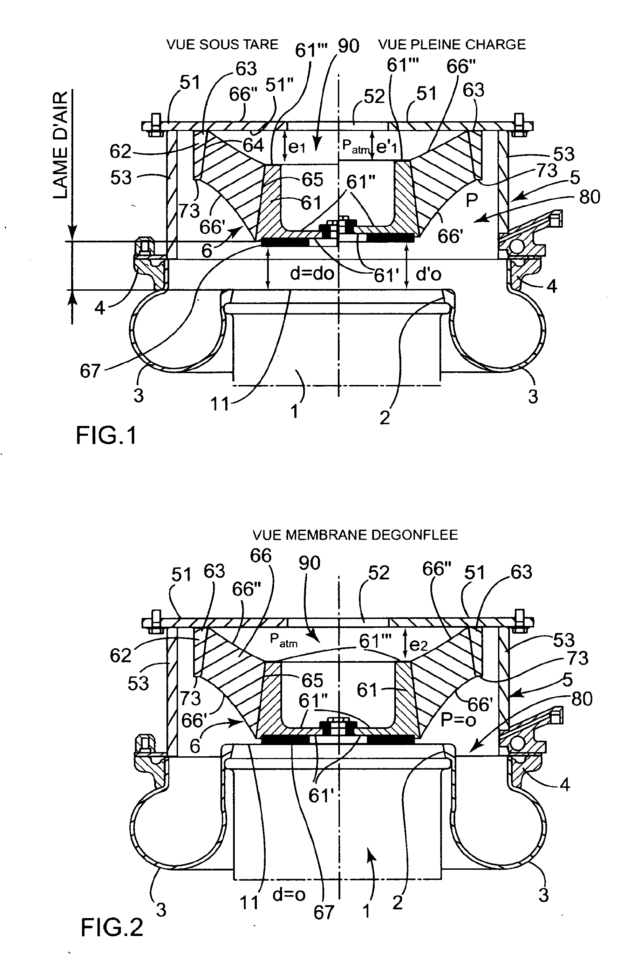

Comme représenté à la figure 1, la suspension secondaire, ici donnée à titre d'exemple dans le cas du train pendiculaire Talgo comporte une membrane annulaire (ou torique) 3 montée étanche entre d'une part une tringle inférieure 2 montée à la partie supérieure 11 d'une colonne verticale 1 qui fait partie du bogie 1, et d'autre part une tringle supérieure 4 montée sur le bas d'un caisson 5 lui-même solidaire de la caisse. La membrane 3 et le caisson 5 forment une cavité 80 à pression P (réglable entre 2,4 bars correspondant à un effort de tare à vide et 3,8 bars, à pleine charge pour le train Talgo).

La caisse 5 présente une paroi cylindrique 53 à l'extrémité inférieure de laquelle est montée la tringle supérieure 4 et un fond 51 dans lequel est ménagée une ouverture de mise à l'air libre 52.

Le ressort de secours présente :
- une pièce centrale massive 61 sur laquelle est montée une pièce annulaire 67 formant butée pour la partie supérieure de la colonne 11 en mode dégonflé (P = 0) ;
- une pièce extérieure cylindrique 62 ayant une face supérieure 63 solidaire de manière étanche au fond 52 ;
- une pièce en élastomère 66 adhérisée en 64 et 65 aux pièces 61 et 62.

La membrane 3, la paroi cylindrique 53, la face 73 de la pièce 62, la face inférieure 66' de la pièce élastomère 66, la pièce 67, et la face inférieure 61' de la pièce centrale 61 définissent la cavité 80 à la pression P.

La face supérieure 66" de la pièce en élastomère 66, les faces supérieures 61" et 61"' de la pièce massive 61, et la partie 51" du bord inférieur du fond 51 qui est située à l'intérieur de la pièce 62 définissent une cavité 90 mise à la pression atmosphérique par l'ouverture 52.

En mode gonflé (P compris entre 2,4 et 3,8 bar), la force résultant de la pression P sur les régions 66', 67 et 61', repousse la pièce centrale rigide 61 en direction de la paroi 51 à une distance e₁ de celle-ci (pour la caisse à vide) jusqu'à une distance e'₁ < e₁ à pleine charge, ce qui lui confère à vide ou pour toute charge une précontrainte pneumatique. Pour le train Talgo, la distance d'ₒ entre la face supérieure 11 de la colonne verticale 1 et la butée 67 est de 74 mm pour P = 3,8 bars (pleine charge). Elle est de do pour P = 2,4 bars (caisse à vide).

En mode dégonflé (P = 0, d = 0) la précontrainte pneumatique disparaît et la pièce centrale rigide 61 se trouve à une distance e₂ de la paroi 51 qui peut être de préférence supérieure à la distance e₁. Le passage du mode gonflé au mode dégonflé s'opère progressivement au fur et à mesure de la perte de pression, par éloignement de la pièce centrale rigide 61 de la paroi 51. Lorsque la membrane 3 est dégonflée, la caisse redescend jusqu'au contact de la pièce 67 du ressort de secours avec le haut de la colonne verticale 1. Dans ce cas, e₂ peut donc être inférieur ou égal à e₁, mais il lui est de préférence supérieur.

Lors du passage du mode gonflé au mode dégonflé, la pièce 61 descend d'une course c qui vient diminuer la variation de la hauteur de caisse. Cette variation était dans l'Art Antérieur (précontrainte mécanique) ici au moins égale à dₒ (74 mm pour le train Talgo). Cet affaissement n'est plus que de do-c.

On a donc intérêt à augmenter autant que faire se peut la course c de la pièce 61 entre les deux modes.

Ce dispositif présente la particularité de présenter deux raideurs distinctes :
- en mode gonflé, il s'agit d'une raideur en pression due à la pression P dans la cavité 80 ;
- en mode dégonflé, il s'agit d'une raideur en force qui est due au poids de la caisse retransmis par la colonne verticale 1.

On peut, en jouant sur la section efficace d'application de la pression P obtenir que le déplacement de la pièce 61 correspondant à l'effort de tare sous la pression P = 2,4 bar en mode gonflé soit supérieur ou égal au déplacement de la pièce 61 sous l'effort de tare retransmis directement par la colonne 1 en mode dégonflé.

L'invention s'applique à toutes les suspensions secondaires sujettes à des instabilités en horizontale. Elle s'applique également aux suspensions secondaires nécessitant un pied souple. Dans ce cas, le dispositif de suspension de secours se substitue au pied souple.

## Revendications

1. Elément de suspension secondaire comprenant une membrane annulaire dont la partie interne est montée sur une première tringle solidaire d'un bogie et dont la partie externe est montée sur une deuxième tringle d'un caisson destiné à être solidarisé à une caisse d'un véhicule ferroviaire et comprenant un dispositif élastique de suspension de secours solidaire du caisson et sur lequel la première tringle vient en butée lors d'une dépressurisation d'une chambre de pression délimitée par le caisson et la membrane, **caractérisé en ce que** le dispositif élastique de suspension de secours est monté sans précontrainte mécanique, et présente une pièce centrale rigide (61) et une pièce externe cylindrique rigide (62), entre lesquels est adhérisé un élément élastique (66), la pièce externe annulaire rigide (61) étant solidaire d'un fond (51) du caisson opposé à la membrane annulaire (3), le fond du caisson (51) présentant une ouverture (52) de mise à l'air libre, de manière à définir une chambre (90) de mise à l'air libre d'une face (61", 61"') du dispositif élastique de suspension du secours qui est opposée à la chambre de pression (80), le dispositif élastique de suspension de secours ayant une position de secours correspondant à une dépressurisation de la membrane annulaire (3) où la pièce centrale rigide (61) est espacée du fond du caisson (distance e₂) et vient en butée avec la première tringle (2) ; et une position active correspondant à une mise en pression (P) de la chambre de pression (80), dans laquelle la pièce centrale rigide (61) est poussée par la pression (P) dans la chambre de pression (80) en direction du fond (51) du caisson (distance entre e'₁ et e₁).

2. Elément de suspension secondaire selon la revendication 1, **caractérisé en ce que** l'élément élastique (66) est tronconique, en s'évasant en direction de la membrane annulaire (3).

3. Elément de suspension secondaire selon la revendication 1, **caractérisé en ce que** l'élément élastique (66) est cylindrique.

4. Elément de suspension secondaire selon l'une des revendications précédentes, **caractérisé en ce que** la section efficace d'application de la pression (P) est telle que le déplacement de la pièce centrale rigide (61) sous une pression de tare, par exemple 2,4 bars, correspondant à un effort de tare en mode gonflé, soit supérieur ou égal au déplacement de la pièce centrale rigide (61) sous ledit effort de tare retransmis directement par la première tringle en mode dégonflé.

5. Véhicule ferroviaire pendulaire, **caractérisé en ce qu'**il comporte au moins une suspension secondaire selon l'une des revendications précédentes.
